# EUROPEAN PATENT APPLICATION

(11) **EP 1 691 123 A1**
(43) Date of publication of application: **16.08.2006**
(21) Application number: 04791377.7
(22) Date of filing: 21.10.2004
(51) Int. Cl.: F16L 33/02

(54) **IMPROVED HOLDING GASKET**

(30) Priority: 13.11.2003 ES 200302611 U
(71) Applicant: Tame Industrial Navarcles, S.L., 08270 Navarcles (ES)
(72) Inventor: FERN NDEZ DOMENEC, Antonio, E-08270 Navarcles (ES)
(74) Representative: Munoz Garcia, Antonio
(86) International application number: PCT/ES2004/000458
(87) International publication number: WO 2005/047749

(57) **Abstract**

The invention relates to an improved gasket holding comprising an annular body (2) which forms said gasket (1). According to the invention, the annular body is made from stainless steel and is equipped with two outer projections (3) having two corresponding inner recesses (4). In addition a flat area is provided at the outer sides of the projections (3) and recesses (4). Moreover, the gasket is equipped with connection means which are provided at the ends (5) thereof and peripheral rectangular openings (10) which are arranged parallel to one another.

## Description

### OBJECT OF THE INVENTION

The present specification relates to an improved holding gasket, the obvious purpose of which resides in being a gasket having the ability to hold filters on hoses and the like, the holding being carried out in a highly simplified manner, without requiring the use of auxiliary tools for the holding and corresponding adjustment.

### FIELD OF THE INVENTION

This invention is applicable within the industry dedicated to manufacturing gaskets industry in general, especially gaskets for filters.

### BACKGROUND OF THE INVENTION

The applicant is aware of the current existence of a number of gaskets used for different purposes, including a series of gaskets which can be used for holding filters on hoses.

However, the applicant is not aware of the current existence of an invention having the features described in this specification and which has quality of being able to carry out the holding without the use of an auxiliary tool.

### DESCRIPTION OF THE INVENTION

The improved holding gasket proposed by the invention is in itself an invention provided with a series of features having advantages in its application that are not contemplated in other inventions of similar use

More specifically, the improved holding gasket object of the invention is formed from an annular body made from stainless steel capable of being duly machined in order to shape the annular body, incorporating connection means on its ends by means of welding or riveting in order to maintain the ends of the annular body within the dimensions duly established for its application.

The body of the holding gasket made from stainless steel is provided with three parallel bands on its surface, two of which being lateral and the other being central, said bands being separated by two other bands parallel to one another at a different level in relation to the former bands and the cross section of which is a semi-circle.

The two semi-circular bands are provided with aligned rectangular openings, uniformly distributed along the perimeter and also parallel to one other.

It is necessary to reiterate that the ends of the body of the holding gasket are connected together in accordance with the dimensions required for the invention, being the suitable dimensions, by means of welding or by means of the use of rivets.

### DESCRIPTION OF THE DRAWINGS

To complement the description being given and to aid in better understanding the features of the invention, a set of drawings is attached to this specification as an integral part thereof which, in an illustrative and non-limiting manner, shows the following:

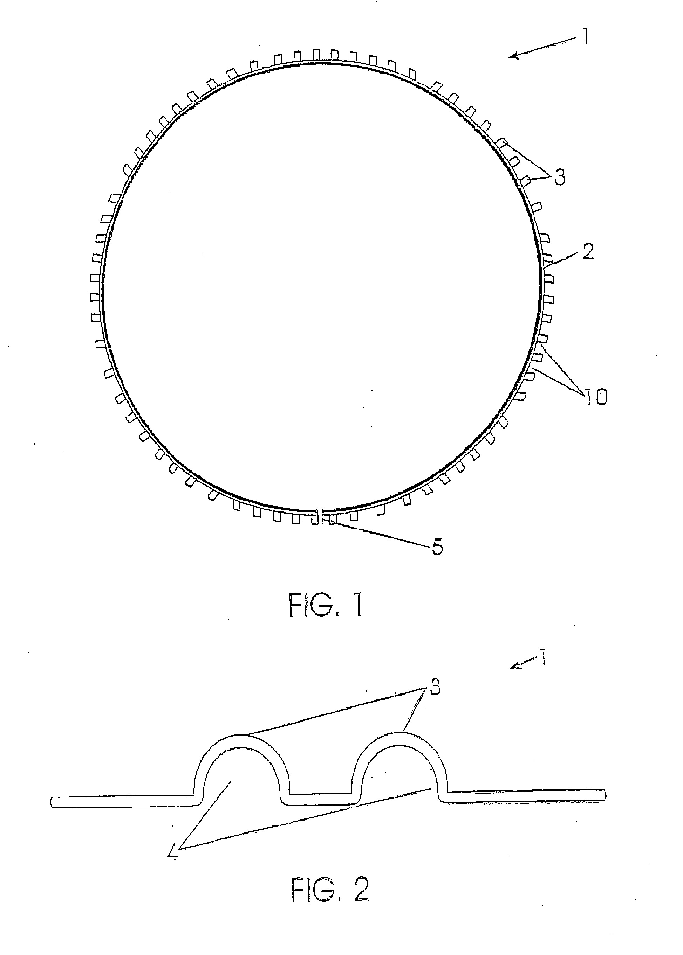

Figure 1 shows a front elevational view of the object of the invention corresponding to an improved holding gasket.
Figure 2 shows a profile detail of the object shown in Figure 1.

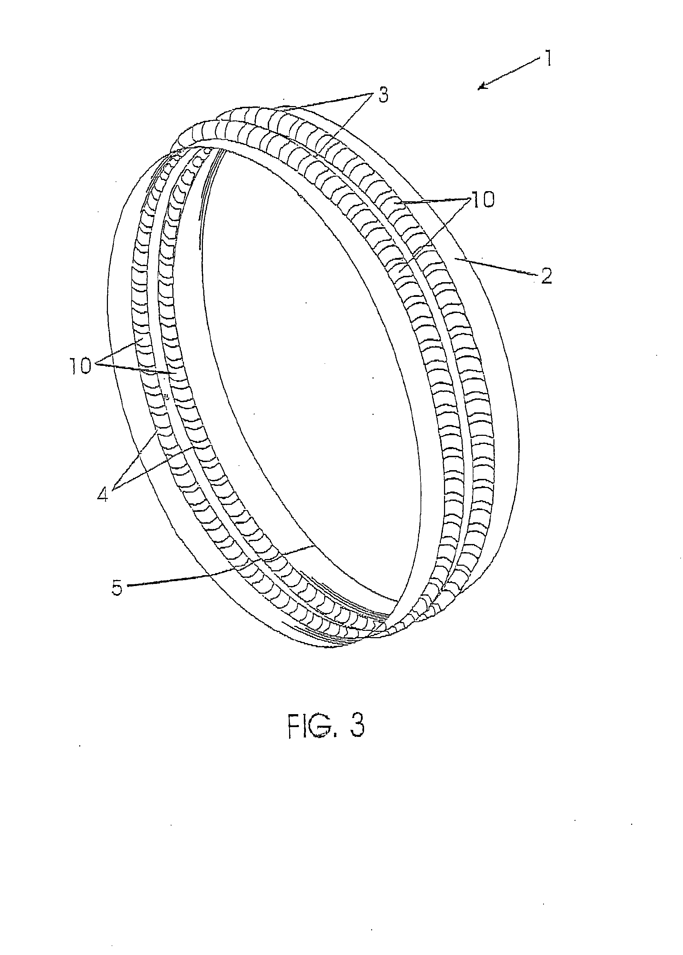

Finally, Figure 3 shows a perspective view of the object shown in the previous figures, being able to observe in this figure the openings existing in the semi-circular areas having a convex surface (3) and an opposite concave surface (4).

### PREFERRED EMBODIMENT OF THE INVENTION

It can be observed in these figures how the improved holding gasket (1) is formed from a body (2) made from stainless steel having an annular shape, having at its ends an area (5) intended for being used to connect the ends of general body (1) by means of welding or rivets.

The two semi-circular areas having a convex surface (3) in the outer area and a concave surface (4) in the inner area are provided with rectangular openings (10) uniformly distributed along the perimeter and arranged parallel to one other.

## Claims

1. An improved holding gasket, of the type intended to be used for holding filters and the like on hoses, **characterized by** being formed from an annular body (2) forming said gasket (1) made from stainless steel, provided on its outer surface with two perimetral projections (3) of a blunt surface, coinciding in the inner area with two corresponding and also perimetral recesses (4), between which there is a planar area of less width than those existing on the outer sides of the projections (3) and the recesses (4) in its inner area.

2. An improved holding gasket according to the claim 1, **characterized by** being provided with connection means on ends the (5) by means of welding or riveting.

3. An improved holding gasket according to the previous claims, **characterized in that** in the semi-circular areas provided with a convex surface (3) and in the opposite area with concave surface (4), there are rectangular openings (10) uniformly distributed along the perimeter parallel to one other.
